# FASCICULE DE BREVET EUROPEEN

(11) **EP 2 655 147 B1**
(45) Date de publication et mention de la délivrance du brevet: **22.04.2015**
(21) Numéro de dépôt: 11788843.8
(22) Date de dépôt: 30.11.2011
(51) Int. Cl.: B60T 11/232, B60T 11/236

(54) **PISTON PRIMAIRE PLASTIQUE A INSERT POUR MAÎTRE-CYLINDRE TANDEM A PENETRATION ET MAÎTRE-CYLINDRE MUNI D'UN TEL PISTON**
HAUPTTANDEMZYLINDERKOLBEN AUS PLASTIK SOWIE HAUPTZYLINDER MIT SO EINEK KOLBEN
PLASTIC TANDEM MASTER CYLINDER PRIMARY PISTON AND MASTER CYLINDER WITH SUCH A PISTON

(30) Priorité: 21.12.2010 FR 1005009
(43) Date de publication de la demande: 30.10.2013
(73) Titulaire: Robert Bosch GmbH, 70442 Stuttgart (DE)
(72) Inventeur: RODRIGUEZ, Marc, F-95280 Jouy le Moutier (FR); BERNADAT, Olivier, F-94170 Le Perreux (FR); LHUILLIER, Laurent, F-93150 Le Blanc Mesnil (FR); GRECH, Daniel, F-60260 Lamorlaye (FR)
(86) Numéro de dépôt international: PCT/EP2011/071364
(87) Numéro de publication internationale: WO 2012/084435

(56) Documents cités:
- EP-A1- 2 199 164
- DE-A1-102006 000 341
- FR-A1- 2 820 701
- FR-A1- 2 827 244
- US-A1- 2005 044 852

## Description

### Domaine de l'invention

L'invention se rapporte à un piston primaire de maître-cylindre d'un véhicule automobile et au maître-cylindre muni d'un tel piston.

### Etat de la technique

Les maîtres-cylindres connus dans l'état de la technique comportent un piston primaire et un piston secondaire généralement réalisés en aluminium et montés tous deux en série dans l'alésage axial du corps de maître-cylindre de frein, généralement réalisé en aluminium et usiné. De tels maîtres-cylindres sont décrits dans le document FR 2 827 244 et le document DE 102006000341 A1. Une tige de poussée placée dans une cavité du piston primaire permet d'actionner le déplacement du piston primaire. Le piston primaire a pour rôle de mettre sous pression une chambre de pression primaire et le piston secondaire a pour rôle de mettre sous pression une chambre de pression secondaire. Des ressorts primaire et secondaire ont tendance à repousser les pistons dans le sens inverse du déplacement assurant la montée en pression.

L'alésage du maître-cylindre est alimenté en liquide de frein par deux perçages d'alimentation qui sont raccordés à un réservoir de liquide de frein. Les perçages d'alimentation permettent d'alimenter les chambres de pression primaire et secondaire. Ces perçages débouchent dans des chambres annulaires. Des joints d'étanchéité annulaires appelés coupelles sont prévus de part et d'autre des chambres annulaires.

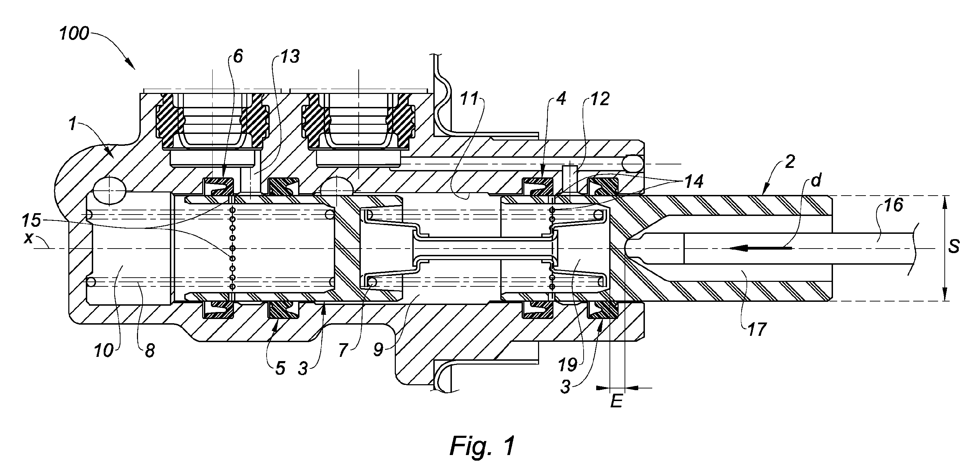

L'alimentation des chambres de pression en liquide de frein se fait lorsque les pistons sont au repos. Les pistons sont alors dans la position représentée figure 1. L'alimentation se fait par l'intermédiaire des passages prévus dans les parois des pistons et qui font alors communiquer les perçages d'alimentation et les chambres annulaires avec l'intérieur des pistons primaire et secondaire donnant respectivement dans les chambres de pression primaire et secondaire. Lorsque les pistons avancent (sens de la flèche D sur la figure 1), les passages des pistons franchissent les joints d'étanchéité pour isoler les chambres d'alimentation et ainsi permettre l'établissement d'une pression de freinage dans les chambres de pression primaire et secondaire.

L'ensemble du maître-cylindre est susceptible d'être monté sur un servomoteur d'assistance au freinage.

Lorsque les pistons sont déplacés selon le sens de la flèche D par la tige de poussée qui exerce un appui ponctuel sur le piston primaire, la coupelle 4 isole la chambre de pression primaire du perçage d'alimentation primaire et la coupelle 6 isole la chambre de pression secondaire du perçage d'alimentation. Lorsque l'effort sur la tige de poussée est relâché, le volume de liquide de frein accumulé dans les freins et les ressorts du maître-cylindre repoussent les pistons en position repos. Il peut arriver, que lors d'un relâché rapide de la tige de poussée, le liquide de frein des chambres de pression du maître-cylindre passe en dessous de la pression atmosphérique, à cause de l'action des ressorts qui repoussent les pistons plus vite que la capacité de passage de liquide du frein dans le maître-cylindre. Au moment où les pistons arrivent en position repos, les communications entre le réservoir à pression atmosphérique et chambres du maître-cylindre s'ouvrent de manière directe, il se produit un passage brutal de liquide de frein qui génère du bruit dans le maître-cylindre, appelé « coup de bélier ».

Afin d'améliorer les performances des maîtres-cylindres, il est nécessaire de prévoir des formes particulières sur les pistons des maîtres-cylindres en aluminium ; ces formes peuvent entraîner des surcoûts importants dus à leur complexité de réalisation.

### But de l'invention

La présente invention a pour but de développer un piston primaire en plastique, simple à réaliser, économique et capable de résister aux contraintes mécaniques exercées sur un maître-cylindre.

### Exposé et avantages de l'invention

L'invention a principalement pour objet un piston primaire de maître-cylindre de frein du type défini ci-dessus, comprenant au moins le piston primaire et un piston secondaire montés dans l'alésage du maître-cylindre, ces pistons permettant de créer une pression, respective dans une chambre de pression primaire et dans une chambre de pression secondaire, sous l'action d'une tige de poussée appliquée sur le piston primaire caractérisé en ce que le piston primaire est en matière plastique moulée, muni d'un insert métallique en tôle emboutie surmoulée situé entre la chambre de pression primaire du maître-cylindre et la cavité de réception de la tige de poussée exerçant une force pour déplacer le piston primaire et générer une pression dans le maître-cylindre et qu'il comporte également au moins une rainure dans son diamètre extérieur débouchant sur la face avant du piston primaire ; le piston est réalisé de manière préférentielle en un plastique thermodurcissable également et de manière encore plus préférentielle en résine phénolique chargée de fibres de verre.

Le surmoulage du corps de piston sur l'insert permet de rendre étanche l'un par rapport à l'autre. Le corps plastique et l'insert métallique confèrent au piston primaire une résistance mécanique augmentée et permettant de réduire les épaisseurs de la matière plastique et de rendre le piston primaire plus compact.

Selon une autre caractéristique avantageuse, le corps du piston primaire se réalise facilement par moulage par injection, ce qui permet la réalisation de formes complexes telles que des rainures, nervures et trous non cylindriques.

Suivant une autre caractéristique avantageuse, le corps du piston se réalise facilement par moulage par injection et le piston primaire sortant du moule est prêt au montage sans nécessiter de travail de finition contrairement à un piston en aluminium qui nécessite une reprise d'usinage.

Suivant une autre caractéristique avantageuse, le corps du piston se réalise facilement par moulage avec des matières plastiques thermodurcissables qui permettent une rectification de surface par usinage afin d'améliorer la fiabilité du maître-cylindre.

Suivant une autre caractéristique avantageuse, le corps du piston se réalise facilement par moulage par injection de matières plastiques qui permettent l'amortissement des bruits engendrés par le liquide de frein.

Suivant une autre caractéristique avantageuse, l'insert métallique possède au moins un trou pour maintenir l'insert dans le moule avant l'injection de la matière plastique.

Suivant une autre caractéristique avantageuse, l'insert est réalisé en une matière magnétisable afin que le piston génère un champ magnétique qui peut être détecté par un capteur de champ magnétique.

L'épaisseur de l'insert est déterminée pour résister à une pression d'essai du maître-cylindre de 40 MPa. Cette épaisseur prend en compte le diamètre du piston primaire et la section d'appui de la tige de poussée.

Les différents objets et caractéristiques de l'invention apparaîtront plus clairement dans la description et dans les figures annexées qui représentent :
- la figure 1 est une vue en coupe axiale d'un maître-cylindre connu selon l'état de la technique et décrit précédemment,
- la figure 2 est une vue isométrique avec partiellement arrachée d'un exemple de réalisation d'un piston de maître-cylindre selon l'invention avec des rainures à l'avant du piston,
- la figure 3 est une vue partielle en coupe axiale d'un exemple de réalisation d'une partie d'un maître-cylindre selon l'invention dont le piston secondaire et les ressorts ne sont pas représentés.

### Description de modes de réalisation

La figure 1 montre un maître-cylindre de frein 100 possédant un alésage 11 recevant un piston primaire 2, un piston secondaire 3 et des ressorts primaire 7 et secondaire 8. Les pistons 2, 3 ont pour rôle de mettre sous pression des chambres de pression primaire 9 et secondaire 10 respectives. Des perçages d'alimentation en liquide de frein 12, 13 sont destinés à être raccordés à un réservoir de liquide de frein (non représenté). De part et d'autre du perçage d'accès 12 sont prévues des coupelles 3, 4 et de part et d'autre du perçage 13, des coupelles 5, 6. Lorsque le maître-cylindre est au repos, le piston primaire est dans la position représentée sur la figure 1. Les parois des pistons munis de passage 14, 15 et font communiquer les perçages 12, 13 avec l'intérieur du piston et les chambres de pression primaire 9 et chambre de pression secondaire 8. Au repos, les coupelles 4, 6 permettent la communication entre les perçages 12, 13 et les chambres de pression primaire, secondaire 9, 8 qui sont ainsi alimentées en liquide de frein.

Lorsque, sous l'effet d'une force de freinage exercée suivant le sens D par une tige de poussée 16 placée dans la cavité 17 du piston primaire 2, le piston primaire 2 est déplacé selon le sens de la flèche D, la coupelle 6 obture les passages 15 en forme de trous, puis la coupelle 4 obture les passages 14. Les chambres de pression primaire et secondaire étant isolées des perçages 12, 13, une pression s'établit dans les chambres 9, 10. Cette pression est proportionnelle à l'effort exercé suivant le sens D par la tige de poussée 16 placée dans la cavité 17 du piston primaire 2. Le diamètre extérieur S du piston primaire 2 forme une section soumise à la pression de la chambre primaire. Dans la cavité 17 du piston primaire, la tige de poussée 16 applique un effort pour générer une pression dans le maître-cylindre mais sur un diamètre nettement inférieur, au minimum 4 fois, ce qui provoque des contraintes importantes au niveau du piston primaire et nécessite une épaisseur minimum de matière E entre la cavité 17 de réception de la tige de poussée et la cavité avant 19 du piston primaire 2 débouchant dans la chambre de pression 9.

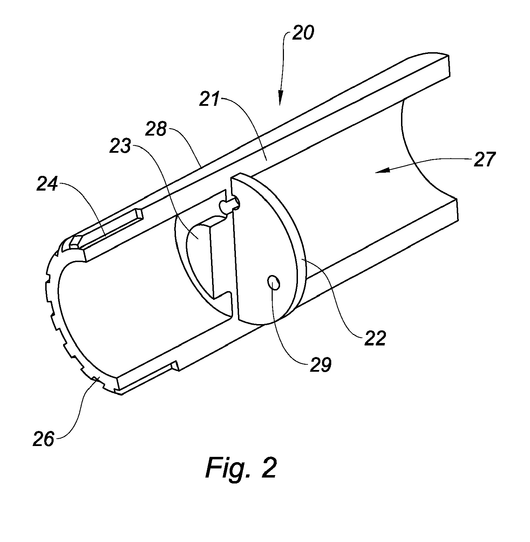

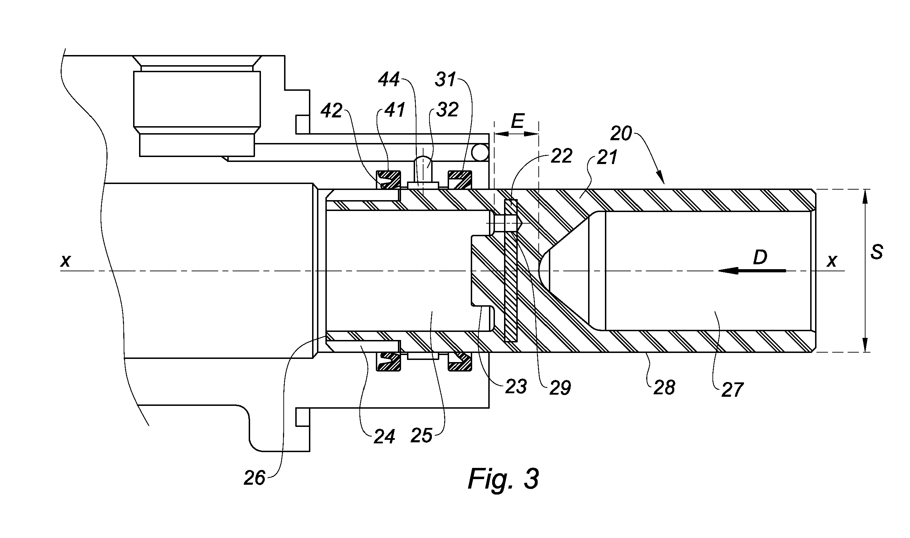

Les figures 2 et 3 montrent un piston primaire 20 de maître-cylindre selon l'invention ayant un corps 21 en matière plastique moulée et muni d'un insert métallique 22 en tôle emboutie surmoulée et située entre une cavité avant 25 et une cavité 27 de réception de la tige de poussée. Le corps comporte également au moins une rainure 24 sur une surface 28 et débouchant sur une face avant 26. Les rainures 24 sont de longueur suffisante pour que quand le maître-cylindre est au repos, les rainures laissent passer le liquide de frein sous un point d'étanchéité 42 d'une coupelle 41 et débouchent dans une chambre annulaire 44 située entre des coupelles 31, 41. Ces rainures forment des passages entre la chambre de pression et la chambre annulaire reliée au réservoir par un perçage 32. L'utilisation de matière(s) plastique(s) permet de réduire les coûts en prévoyant les formes des rainures dans le moule. L'utilisation de matière(s) plastique(s) oblige à augmenter les épaisseurs et à utiliser plus de matière pour palier à la différence de résistance mécanique des matériaux. Le corps 21 en matière plastique et l'insert métallique 22 confèrent au piston primaire une résistance mécanique augmentée et permettent de réduire l'épaisseur de la matière plastique (E) et de rendre le piston 20 plus compact. Ainsi selon l'invention, avec l'insert entre la cavité avant 25 et la cavité 27 de réception de la tige de poussée permet d'avoir les avantages de la résistance mécanique de l'aluminium et la facilité de fabrication des formes complexes telles que des rainures, grâce à l'utilisation de matières plastiques qui peuvent être moulées. De plus la compacité ainsi obtenue du piston primaire permet au maître-cylindre d'être plus compact et de faire des économies sur les matériaux utilisés pour le maître-cylindre.

Selon une autre caractéristique avantageuse, le corps 21 du piston 20 se fabrique facilement par moulage par injection, ce qui permet la réalisation de formes complexes telles que les rainures 24.

Suivant une autre caractéristique avantageuse, le corps 21 du piston se fabrique facilement par moulage de matière plastique thermodurcissable qui permet une rectification de la surface 28 par usinage afin d'améliorer la fiabilité du maître-cylindre.

Suivant une autre caractéristique avantageuse, l'insert 22 métallique possède au moins un trou 29 pour maintenir l'insert dans le moule avant l'injection de la matière plastique, l'axe du trou étant avantageusement sensiblement parallèle à l'axe X du piston primaire. Après injection de la matière plastique, le trou 29 de l'insert 22 forme un trou borgne dans le piston 20.

Selon une autre caractéristique avantageuse, le maître-cylindre comporte un piston primaire 20 avec l'insert 22 en une matière magnétisable, afin que le piston génère un champ magnétique capable d'être détecté par un capteur de champ magnétique.

### NOMENCLATURE

- 1: Corps
- 2: Piston primaire
- 3: Piston secondaire
- 4: Coupelle
- 5: Coupelle
- 6: Coupelle
- 7: Ressort
- 8: Ressort
- 9: Chambre de pression secondaire
- 10: Chambre de pression primaire
- 11: Alésage
- 12: Perçage
- 13: Perçage
- 14: Rainures, passages
- 15: Perçages, passages
- 16: Tige de poussée
- 17: Cavité du piston primaire
- 18: Coupelle
- 19: Cavité avant
- 20: Piston primaire selon l'invention
- 21: Corps de piston
- 22: Insert
- 23: Centreur de ressort
- 24: Rainure
- 25: Cavité avant
- 26: Face avant du piston
- 27: Cavité de réception de la tige de poussée
- 28: Surface du piston
- 29: Trou
- 31: Coupelle
- 32: Perçage
- 41: Coupelle
- 42: Point d'étanchéité
- 44: Chambre annulaire
- 100: Maître-cylindre tandem
- E: Epaisseur de matière entre les deux cavités
- S: Diamètre du piston
- X: Axe du maître-cylindre et des pistons

## Revendications

1. Piston primaire de maître-cylindre tandem à pénétration de frein, **caractérisé en ce qu'**un piston primaire (20) est en matière plastique moulé et muni d'un insert métallique en tôle emboutie (22) surmoulée, situé entre une cavité avant (25) et une cavité (27) et ce qu'il comporte également au moins une rainure (24) dans la surface (28) débouchant sur la face avant (26).

2. Piston primaire selon la revendication 1,
**caractérisé en ce qu'**
il est réalisé en une matière plastique thermodurcissable.

3. Piston primaire selon la revendication 1,
**caractérisé en ce que**
l'insert (22) métallique possède au moins un trou (29).

4. Piston primaire selon la revendication 3,
**caractérisé en ce que**
le trou (29) est sensiblement parallèle à l'axe du piston.

5. Piston primaire selon les revendications 3 et 4,
**caractérisé en ce qu'**
après injection de la matière plastique, le trou (29) de l'insert (22) forme un trou borgne dans le piston (20).

6. Piston primaire selon les revendications 1 et 2,
**caractérisé en ce que**
la surface (28) du piston (20) est rectifiée par usinage.

## Patentansprüche

1. Primärkolben für einen Tandem-Hauptbremszylinder mit Durchdringung, **dadurch gekennzeichnet, dass** ein Primärkolben (20) aus geformtem Kunststoff hergestellt ist und mit einem umspritzten Metalleinsatz (22) aus Pressstahl versehen ist, der sich zwischen einem vorderen Hohlraum (25) und einem Hohlraum (27) befindet, und dass er ferner mindestens eine Nut (24) in der Oberfläche (28) umfasst, die auf die Vorderseite (26) mündet.

2. Primärkolben nach Anspruch 1,
**dadurch gekennzeichnet, dass**
er aus wärmehärtendem Kunststoff hergestellt ist.

3. Primärkolben nach Anspruch 1,
**dadurch gekennzeichnet, dass**
der Metalleinsatz (22) mindestens eine Bohrung (29) aufweist.

4. Primärkolben nach Anspruch 3,
**dadurch gekennzeichnet, dass**
die Bohrung (29) im Wesentlichen parallel zur Achse des Kolbens ist.

5. Primärkolben nach Anspruch 3 und 4,
**dadurch gekennzeichnet, dass**
die Bohrung (29) des Einsatzes (22) nach dem Einspritzen des Kunststoffs eine Blindbohrung im Kolben (20) bildet.

6. Primärkolben nach Anspruch 1 und 2,
**dadurch gekennzeichnet, dass**
die Oberfläche (28) des Kolbens (20) maschinell bearbeitet wird.

## Claims

1. Primary piston for a tandem penetration-type brake master cylinder, **characterized in that** a primary piston (20) is made of moulded plastic material and provided with a metallic insert (22) made of overmoulded stamped sheet metal, which insert is situated between a front cavity (25) and a cavity (27), and **in that** it also comprises at least one groove (24) in the surface (28) opening onto the front face (26).

2. Primary piston according to Claim 1, **characterized in that** it is made of a thermosettable plastic material.

3. Primary piston according to Claim 1, **characterized in that** the metallic insert (22) has at least one hole (29).

4. Primary piston according to Claim 3, **characterized in that** the hole (29) is substantially parallel to the axis of the piston.

5. Primary piston according to Claims 3 and 4, **characterized in that**, after injection-moulding of the plastic material, the hole (29) of the insert (22) forms a blind hole in the piston (20).

6. Primary piston according to Claims 1 and 2, **characterized in that** the surface (28) of the piston (20) is ground by machining.
